**Europäisches Patentamt**

**European Patent Office**

**Office européen des brevets**

(19)

(11) Numéro de publication: **0 003 936**
**B1**

(12) **FASCICULE DE BREVET EUROPEEN**

(45) Date de publication du fascicule de brevet: **13.05.81**

(51) Int. Cl.³: **B 25 J 21/00, G 21 F 7/06**

(21) Numéro de dépôt: **79400114.9**

(22) Date de dépôt: **26.02.79**

(54) **Dispositif automatique de pesée et de vidange d'un produit contenu dans un récipient muni d'un couvercle.**

(30) Priorité: **01.03.78 FR 7805866**

(43) Date de publication de la demande: **05.09.79 Bulletin 79/18**

(45) Mention de la délivrance du brevet: **13.05.81 Bulletin 81/19**

(84) Etats Contractants Désignés: **BE CH DE GB IT SE**

(56) Documents cités:
**FR - A - 1 543 264**
**US - A - 3 090 480**
**US - A - 3 252 559**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Berger, Guy c/o Ets SIMON FRERES B.P. 171 F-50104 Cherbourg (FR)** Inventeur: **Salom, Jacques c/o COGEMA Herqueville F-50440 Beaumont-Hague (FR)**

(74) Mandataire: **Mongredien, André et al, c/o Brevatome 25, rue de Ponthieu F-75008 Paris (FR)**

Courier Press, Leamington Spa, England.

# Dispositif automatique de pesée et de vidange d'un produit contenu dans un récipient muni d'un couvercle

La présente invention, qui résulte des travaux de Messieurs Georges BERGER des Etablissements SIMON Frères, et Jacques SALOM de la COGEMA, concerne un dispositif automatique de pesée et de vidange d'un produit contenu dans un récipient muni d'un couvercle. Ce dispositif peut être utilisé dans tous les cas où le produit contenu dans le récipient présente des dangers pour le personnel chargé de le manipuler. Ce cas est fréquent, par exemple, dans les installations nucléaires ou chimiques. Cette manipulation consiste souvent, d'une part en une pesée du produit contenu à l'intérieur du récipient, d'autre part en une vidange de ce produit dans un bac de traitement. Généralement, pour éviter tout accident, cette manipulation est effectuée à distance, à l'intérieur d'une enceinte biologique, de manière à éviter tout risque de contamination du personnel chargé de la manipulation.

On connaît et notamment par US - A - 3 090 480 des dispositifs permettant la manipulation de récipients et de produits à l'intérieur d'une enceinte étanche. Ces dispositifs sont généralement constitués de bras articulés à l'extrémité desquels des doigts permettent de réaliser à distance, des manipulations que l'homme réaliserait à la main s'il ne s'agissait pas de produits dangereux contenus à l'intérieur d'une enceinte. Ces bras et doigts articulés sont généralement dirigés par un opérateur qui agit à l'exterieur de l'enceinte, de manière à actionner les bras et les doigts soit mécaniquement, soit électromécaniquement. Cet opérateur doit donc effectuer à distance toutes les manipulations qu'il aurait réalisées à la main si le produit manipulé n'était pas dangereux. Dans le cas où la manipulation consiste, d'une part, à peser le produit contenu dans le récipient et, d'autre part à vidanger ce produit dans un bac, l'opérateur doit tout d'abord amener le produit contenu dans un récipient sur le plateau d'une balance située à l'intérieur de l'enceinte; il doit ensuite amener le récipient au-dessus d'un bac de vidange pour y déverser le produit, puis ramener ce récipient vide sur le plateau de la balance afin de connaître le poids du produit qui était contenu à l'interieur du récipient, grâce à une méthode de double pesée. Les manipulations réalisées à l'aide de tels dispositifs sont longues et délicates. En effet, l'opérateur, même s'il dispose de dispositifs articulés perfectionnés ne peut travailler aussi rapidement que s'il agissait directement à la main; de plus, du fait de cette action à distance, des incidents de manipulation peuvent surgir, tels que par exemple le renversement du produit en dehors du bac, des difficultés pour enlever le couvercle posé sur le récipient ou pour replacer ce couvercle que l'opérateur peut, par mégarde, laisser échapper à côté du récipient. Dans les installations nucléaires, les récipients contiennent en général des produits radioactifs. Ces produits et ce récipient son souvent très lourds et il est alors encore plus difficile pour un opérateur situé à distance de déplacer ces récipients, enlever leur couvercle, les vider, pesser le produit qu'ils contiennent etc.

La présente invention a pour but de remédier à ces inconvénients et notamment de réaliser un dispositif automatique permettant la pesée et la vidange d'un produit contenu dans un récipient muni d'un couvercle. Ce dispositif entièrement automatique évite toute erreur de manipulation et permet la pesée et la vidange de produits dangereux et lourds contenus dans des récipients eux-mêmes très lourds.

La présente invention a pour objet un dispositif automatique de pesée et de vidange d'un produit contenu dans un récipient muni d'un couvercle, comprenant:
— des moyens pour amener le récipient sur une aire de manipulation;
— des moyens pour saisir le récipient, l'amener sur un appareil de pesée et pour le placer en regard d'un montage de manipulation du couvercle, ces moyens étant commandés par vérins;
— des moyens pour placer le récipient dans le montage de manipulation du couvercle et pour l'engager dans un montage de vidange du produit; caractérisé en ce que la vidange du produit s'effectue par retournement du récipient, et en ce que le dispositif comprend en outre des moyens de synchronisation aptes à commander les moyens et montages précédents dans un premier sens de manière que le récipient soit amené sur l'aire de manipulation, saisi pour être amené sur l'aire de pesée, placé dans le montage de manipulation pour que le couvercle soit extrait, engagé dans le montage de vidange du produit, puis pour que ces moyens et montages soient commandés dans un deuxième sens inverse du premier sens, de manière que le récipient soit dégagé du montage de vidange, placé dans le montage de manipulation pour que le couvercle soit replacé sur le récipient et pour que le récipient soit saisi et ramené sur l'appareil de pesée, puis ramené vers l'aire de manipulation.

Selon une caractéristique avantageuse du dispositif, les moyens permettant de saisir le récipient pour l'anener sur l'appareil de pesée et pour le placer en regard du montage de manipulation du couvercle comprennent un vérin de saisie muni de moyens de préhension et commandé par les moyens de synchronisation, de sorte que le récipient soit saisi sur l'aire de manipulation, amené sur l'aire de pesée avant extraction du couvercle et vidange du produit, puis ramené de l'aire de pesée sur l'aire de manipulation après vidange du produit et fermeture du récipient par le couvercle.

Selon une autre caractéristique de l'invention, le vérin de saisie est monté sur le bâti associé à un vérin vertical apte à soulever le bâti avant pesée du récipient plein, à baisser le bâti pour poser le récipient sur l'appareil de pesée, à soulever le bâti après pesée, à baisser le bâti avant mise en place dans le montage de manipulation pour que le couvercle soit extrait et avant mise en place dans le montage de vidange, puis à soulever à nouveau le bâti après vidange et fermeture du récipient par le couvercle, à abaisser le bâti lorsque le récipient est en regard de l'appareil de pesée, à soulever le bâti après pesée du récipient vide, à baisser le bâti lorsque le récipient est ramené sur l'aire de manipulation, ce vérin de saisie étant commandé par lesdits moyens de synchronisation.

D'autres caractéristiques et avantages de l'invention ressortiront mieux de la description détaillée qui va suivre donnée à titre purement illustratif, en référence aux figures schématiques annexées sur lesquelles:

— la fig. 1 représente une vue de dessus schématique du dispositif de l'invention;

— la fig. 2 représente une vue schématique en coupe des moyens permettant d'enlever et de replacer le couvercle sur le récipient;

— la fig. 3 représente une vue schématique en coupe du montage permettant de vidanger le produit dans un bac.

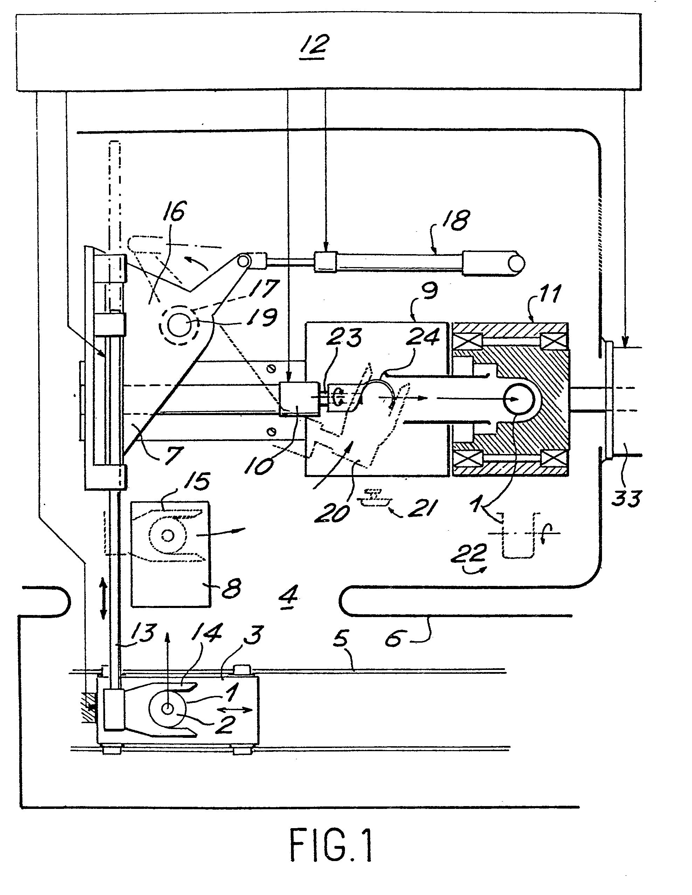

En référence à la fig. 1, on a représenté une vue de dessus schématique du dispositif de l'invention. Ce dispositif permet la pesée et la vidange automatique d'un produit contenu dans un récipient 1 muni d'un couvercle 2. Ce dispositif comprend des moyens 3 pour amener le récipient sur une aire de manipulation 4. Ces moyens peuvent être constitués, pare exemple, par un chariot pouvant circular sur des rails 5. Le chariot ainsi que les divers moyens qui seront décrits par la suite, sont contenus à l'intérieur d'une enceinte 6, par example biologique. Des moyens 7 sont prévus pour saisir le récipient, pour l'amener sur un appareil de pesée 8, et pour le placer en regard d'un montage 9 permettant la manipulation du couvercle 2. Le dispositif comprend également des moyens 10 pour placer le récipient dans le montage 9 de manipulation du couvercle et pour l'engager dans un montage 11 de vidange du produit. Des moyens de synchronisation 12 sont prévus pour commander des relais agissant sur les moyens et montages précédents dans un premier sens, de manière que le récipient sout amené sur l'aire de manipulation 4 par le chariot 3, puis saisi par les moyens 7 de manière à être amené sur l'aire de pesée 8, puis placé dans le montage de manipulation 9 où le couvercle est enlevé puis engagé dans le montage de vidange du produit 11. Ces moyens de synchronisation commandent ensuite les moyens et montages précédents dans un deuxième sens inverse du précédent de manière que le récipient vide soit dégagé du montage de vidange 11, puis replacé dan le montage de manipulation du couvercle 9 permettant de replacer le couvercle sur le récipient, puis pour le récipient soit ramené sur l'appareil de pesée 8 et ramené au point de départ sur le chariot 3.

Les moyens 7 qui permettent de saisir le récipient pour l'amener sur l'appareil de pesée 8 et pour le placer en regard du montage de manipulation 9 du couvercle 2, comprennent un vérin de saisie 13 qui est muni à son extrémité libre, de moyens de préhension 14 qui ont par example la forme d'un C ouvert. Lorsque le chariot 3, qui transporte le récipient 1, arrive en face des moyens de préhension 14, les moyens de synchronisation 12 commandent le vérin 13 de manière que celui-ci soit rétracté dans la position 15; le récipient vient alors sur l'appareil de pesée 8. Ce vérin de saisie 13 est monté sur un bâti 16 qui est associé à un vérin vertical 17; ce vérin vertical permet de soulever le bâti lorsque le récipient est saisi sur le chariot 3 puis amené au-dessus de l'appareil de pesée 8. Le vérin vertical 17 permet aussi de baisser le bâti pour poser le récipient sur l'appareil de pesée. Le bâti est ensuite soulevé après que le récipient contenant le produit ait été pesé, puis abaissé à nouveau avant que le récipient soit mis en place dans le montage de manipulation du couvercle. Le bâti 16 est également associé à un vérin horizontal 18. Ce vérin horizontal permet de faire pivoter le bâti 16 autour de l'axe 19. Ce pivotement du bâti amène le récipient dans la position 20, en regard du montage 9 de manipulation du couvercle 2. Lorsque le récipient est en regard de ce montage, le vérin vertical 17 abaisse le bâti 16 de manière que le récipient puisse être engagé dans le montage de manipulation du couvercle.

Les moyens 10 qui permettent de placer le récipient dans le montage 9 de manipulation du couvercle et d'engager ce récipient dans le montage 11 de vidange des produits, comprennent un vérin muni de moyens de préhension qui seront décrits en détail par la suite. Ce vérin et ces moyens de préhension permettent de saisir le récipient dans la position 20 lorsque le vérin 13 a été dégagé pour revenir dans la position 15. Le récipient est alors amené dans les moyens 9 de manipulation du couvercle de manière que ce couvercle soit enlevé. Les moyens 10 engagent ensuite le récipient dans le montage de vidange du produit 11. Lorsque la vidange du produit est réalisée, les moyens 10 ramènent le récipient vers le montage de manipulation du couvercle pour que le récipient soit refermé. Le vérin de saisie 13 vient alors reprendre le récipient dans la position 20 pour le ramener sur l'aire de pesée 8. Le couvercle enlevé a été représenté en 21 et le récipient 1 vide, a été représenté dans la position 22.

Les moyens de synchronisation 12 qui n'ont pas été représenté en détail sont constitués de manière connue, par example par des temporisateurs agissant sur des relais électromécaniques liés à chacun des vérins des dif-

**0 003 936**

férents moyens du dispositif. Ces relais commandent l'extension ou le retrait des vérins en fonction de la manipulation à réaliser.

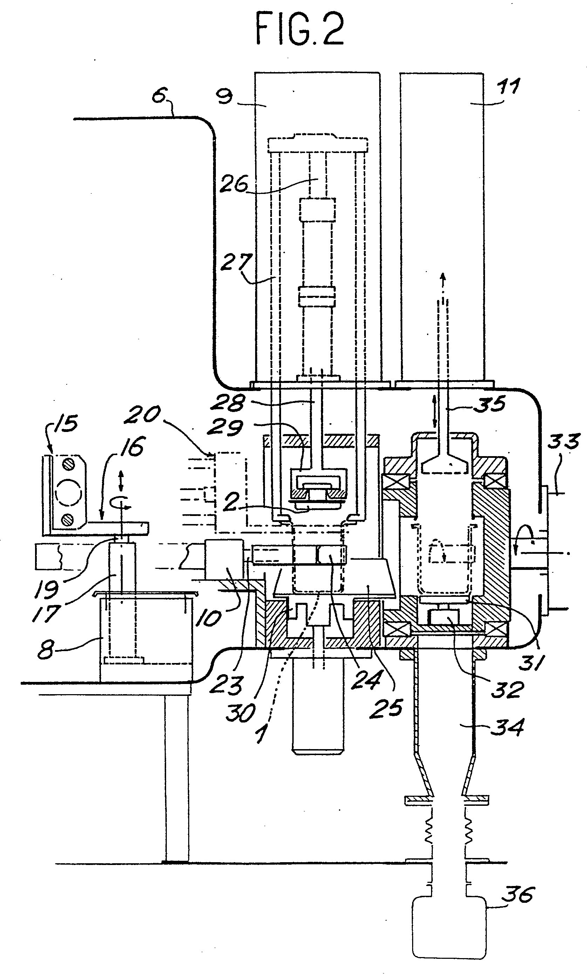

En référence à la fig. 2, on a représenté schématiquement d'une part les moyens 9 de manipulation du couvercle, d'autre part, les moyens 11 qui permettent de vidanger le produit dans un bac 36. On distingue sur cette figure le bâti 16 pivotant autour de l'axe 19 de manière à venir occuper la position 20, en regard du montage de manipulation du couvercle puis s'abaissant ou se relevant grâce au vérin 17. On distingue également sur cette figure, l'appareil de pesée 8 sur lequel vient reposer le récipient soit avant vidange, soit après vidange du produit. Les moyens 10 qui permettent d'amener le récipient dans le montage de manipulation du couvercle sont représentés plus en détail sur cette figure. Ils sont constitués par un vérin 23 muni de moyens de préhension 24; ils permettent d'amener le récipient 1 dans le montage de manipulation 9 du couvercle 2 ou dans le montage 11 de vidange du produit, de ramener ce récipient vers l'arrière, lorsque le produit a été vidangé et lorsque le couvercle a été replacé. Les moyens 9 de manipulation du couvercle comprennent un socle 25 associé à un premier vérin 26 qui maintient le récipient sur le socle 25 grâce à des bras 27. Ce socle est également associé à un deuxième vérin 28 et à des moyens de préhension 29, adaptés à la forme du couvercle et qui permettent soit de retirer, soit de replacer le couvercle 2 sur le récipient 1. Un autre vérin 30 a été représenté sur la figure; ce vérin soulève le socle 25 de manière à renforcer l'action du vérin 26 pour assurer un meilleur maintien du récipient.

Lorsque le couvercle 2 est enlevé grâce au déplacement du vérin 28 vers le haut, le récipient est poussé par le vérin 23 dans le montage de vidange 11.

Le montage 11 de vidange comprend un socle 31 associé à un vérin 32 qui, en se soulevant, maintient le récipient dans le montage de vidange. Ce socle est également associé à des moyens de rotation 33, à axe horizontal, qui font pivoter le récipient autour de cet axe. Lorsque ce récipient pivote, il se vide vers le bas dans la goulotte 34 puis dans le bac 36. Après vidange du produit, les moyens de rotation 33 retournent le récipient de telle sorte que son ouverture soit dirigée vers le haut. Un système d'aspiration 35 qui peut s'abaisser puis se relever, vient aspirer le produit qui aurait pu rester dans le récipient après vidange. Après cette aspiration, le vérin 23 ramène le récipient dans les moyens de manipulation du couvercle où le récipient est refermé. Pour des commodités de présentation, on n'a pas représenté sur cette figure les moyens de synchronisation et les relais agissant sur les différents vérins.

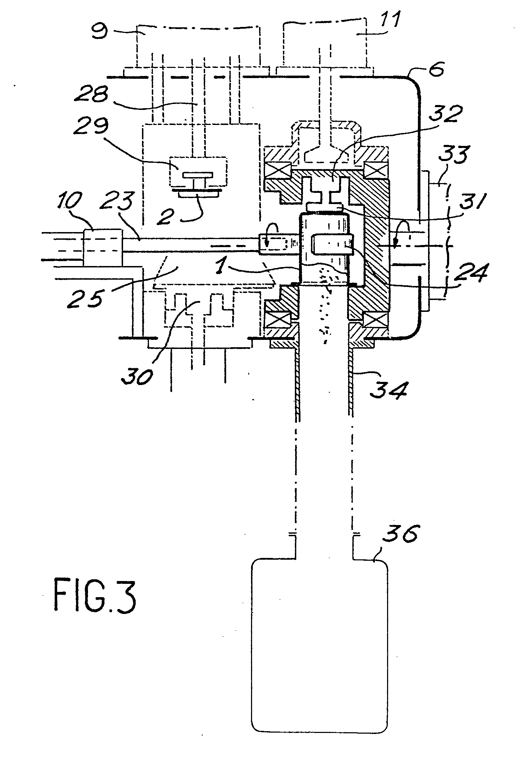

En référence à la fig. 3, on a représenté les moyens 9 de manipulation du couvercle et les moyens 11 de vidange du produit, à l'instant où le couvercle 2 a été enlevé et que le récipient est retourné de manière à ce que le produit soit évacué par l'intermédiaire de la goulotte 34 dans le bac 36. Les moyens de préhension 24 situés à l'extrémité du vérin 23 peuvent pivoter autour du vérin 23 lorque le récipient est retourné pour vidanger le produit.

Les moyens de synchronisation 12, les relais et les différents vérins interviennent de la manière suivante: lorsque le chariot 3 amène le récipient 1 en regard des moyens de préhension 14, le vérin vertical 17 soulève le récipient de manière à le dégager du chariot. Le vérin 13 se rétracte et le récipient est alors amené au-dessus de l'appareil de pesée 8, dans la position 15. Le bâti 16 est alors soulevé par le vérin vertical 17 de manière à dégager le récipient de l'aire de pesée puis ce bâti pivote autour de l'axe 19 sous l'action du vérin 18, le récipient occupe alors la position 20, en regard des moyens de manipulation du couvercle 9. Le bâti 16 s'abaisse ensuite grâce au vérin vertical 17, de manière que le récipient soit déposé sur le socle 25 des moyens de manipulation 9. Le bâti pivote alors en sens inverse sous l'action du vérin 18, les moyens de préhension 14 occupent à nouveau la position 15. Le récipient est alors dégagé et peut être repris par les moyens 10 qui permettent alors d'amener ce récipient dans les moyens de manipulation 9 où il va être maintenu en place grâce aux vérins 26 et 30 et où le couvercle 2 va être enlevé. Lorsque le couvercle a été enlevé, le vérin 23 et les moyens de préhension 24 permettent d'engager le récipient dans les moyens de vidange 11. Le récipient est maintenu en position dans ces moyens de vidange, grâce au socle 31 soulevé par le vérin 32. Le récipient est alors retourné grâce au moyen de rotation 33 et le produit est vidangé; puis le récipient est retourné grâce à ces mêmes moyens 33, de manière que son ouverture soit dirigée vers le haut. Après ce retournement du récipient, le vérin 23 ramène le récipient dans les moyens 9 de manipulation du couvercle; le récipient est maintenu dans ces moyens de manipulation par les vérins 30 et 27; le vérin 28 s'abaisse et le couvercle 2 vient ainsi refermer le récipient 1. Après cette fermeture, les vérins 27, 28 et 30 se relèvent et le récipient est libéré des moyens de manipulation 9. Le socle 16 pivote alors en sens inverse dans la position 20, autour de l'axe 19 grâce au vérin 18, de manière que les moyens de préhension 14 viennent à nouveau saisir le récipient 1. Le vérin 23 est dégagé et le vérin vertical 19 soulève le récipient; le bâti 16 pivote de manière à ramener le vérin 13 dans la position 15, au-dessus du plateau de l'appareil de pesée 8. Le bâti 16 est ensuite abaissé grâce au vérin vertical 17 et le récipient vide est ainsi déposé sur l'appareil de pesée 8. Le récipient ayant été pesé plein puis vide, il est facile de connaître la quantité de produit qu'il contenait. Après cette dernière pesée, le bâti 16 est soulevé grâce au vérin 17, puis le vérin 13 s'allonge de manière que le récipient soit placé au-dessus du chariot 3. Le bâti 16 s'abaisse grâce au vérin 17 et le récipient est déposé sur le chariot 3. Le chariot est ensuite ramené en arrière pour dégager le récipient vide vers l'extérieur de l'enceinte où il pourra à nouveau être rempli ou manipulé.

L'appareil de pesée 8 peut bien entendu être muni de moyens automatiques de repérage des différentes pesées.

Pour des commodités de présentation on n'a pas représenté sur cette figure les moyens de synchronisation et les relais commandant les différents vérins.

Le dispositif de l'invention permet bien d'atteindre les buts mentionnés plus haut. Il permet de réaliser automatiquement d'une part, la pesée, et, d'autre part, la vidange d'un récipient contenant un produit contaminé et dangereux pour un opérateur. Cette manipulation est réalisée à l'intérieur d'une enceinte de protection biologique et le dispositif qui comprend des vérins permet bien une manipulation de récipients très lourds et contenant des produits également très lourds.

Il est bien évident que dans ce mode de réalisation du dispositif de l'invention qui vient d'être décrit en exemple, les moyens utilisés auraient pu être remplacés par des moyens équivalents sans sortir du cadre de cette invention.

## Revendications

1. Dispositif automatique de pesée et de vidange d'un produit contenu un récipient (1) muni d'un couvercle (2) comprenant:
— des moyens (3) pour amener le récipient sur une aire de manipulation (4);
— des moyens (7) pour saisir le récipient (1), l'amener sur un appareil de pesée (8), et pour le placer en regard d'un montage (9), de manipulation du couvercle (2), ces moyens étant commandés par vérins;
— des moyens (10) pour placer le récipient (1) dans le montage (9) de manipulation du couvercle (2) et pour l'engager dans un montage (11) de vidange du produit, ces moyens (10) étant commandés par vérins; caractérisé en ce que la vidange du produit s'effectue par retournement du récipient et en ce que le dispositif comprend en outre des moyens electriques de synchronisation (12) aptes à commander les moyens et montages précédents dans un premier sens, de manière que le récipient (2) soit amené sur l'aire de manipulation (4) saisi pour être amené sur l'aire de pesée (8) placé dans le montage de manipulation (9) pour que le couvercle (2) soit extrait, engagé dans le montage (11) de vidange du produit, puis pour que ces moyens et montages soient commandés dans un deuxième sens inverse du premier sens, de manière que le récipient (2) soit dégagé du montage de vidange (11) placé dans le montage de manipulation (9) pour que le couvercle (2) soit replacé sur le récipient (1) et pour que le récipient soit saisi et ramené sur l'appareil de pesée (8), puis ramené vers l'aire de manipulation (4).

2. Dispositif selon la revendication 1, caractérisé en ce que les moyens (7) permettant de saisir le récipient (1) pour l'amener sur l'appareil de pesée (8) et pour le placer en regard du montage de manipulation (9) du couvercle (2) comprennent un vérin de saisie (13) muni de moyens de préhension (14) et commandé par les moyens de synchronisation (12) de sorte que le récipient (1) soit saisi sur l'aire de manipulation (4) amené sur l'aire de pesée (8) avant extraction du couvercle (2) de vidange du produit, puis ramené de l'aire de pesée (8) sur l'aire de manipulation (4) après vidange du produit et fermeture du récipient (1) par le couvercle (2).

3. Dispositif selon la revendication 2, caractérisé en ce que le vérin de saisie (13) est monté sur un bâti (16) associé à un vérin vertical (17) apte à soulever le bâti (16) avant pesée du récipient plein, à baisser le bâti (16) pour poser le récipient sur l'appareil de pesée (8) à soulever le bâti (16) après pesée, à baisser le bâti (16) avant mise en place dans le montage de manipulation (9) pour que le couvercle (2) soit extrait et avant mise en place dans le montage de vidange (11), puis à soulever à nouveau le bâti (16) après vidange et fermeture du récipient (4) par le couvercle (2), à abaisser le bâti (16) lorsque le récipient est en regard de l'appareil de pesée (8), à soulever le bâti (16) après pesée du récipient vide, à baisser le bâti lorsque le récipient est ramené sur l'aire de manipulation (4), ce vérin de saisie (13) etant commandé par lesdits moyens de synchronisation (12).

4. Dispositif selon la revendication 3, caractérisé en ce que les moyens (10) pour placer le récipient dans le montage de manipulation (9) du couvercle (2) et pour l'engager dans le montage (11) de vidange du produit comprennant un vérin d'engagement (23) muni de moyens de préhension (24), aptes à saisir le récipient (1) après pesée, à l'amener dans le montage de manipulation (9) du couvercle (2) pour que celui-ci soit extrait, á amener ensuite le récipient dans le montage (11) de vidange du produit, puis à ramener le récipient (1) vers le montage de manipulation (9), pour que le récipient soit refermé par le couvercle (2) après vidange, ce verin d'engagement étant commandé par lesdits moyens de synchronisation (12).

5. Dispositif selon la revendication 4, caractérisé en ce que le bâti (16) est associé à un vérin horizontal (16) de pivotement autour d'un axe vertical (19) pour faire passer le récipient (1) d'une position située en regard des moyens de pesée (8) à une position située en regard du montage (9) de manipulation du couvercle, ce vérin étant commandé par les moyens de synchronisation (12).

6. Dispositif selon la revendication 5, caractérisé en ce que le montage (9) de manipulation du couvercle (2) comprend un socle (25) associé à un premier vérin (26) apte à maintenir le recipient (1) sur le socle et un deuxième vérin (28) muni de moyens de préhension (29), aptes à retirer ou à replacer le couvercle (2) ces deux vérins étant commandés par les moyens de synchronisation (12).

7. Dispositif selon la revendication 5, caractérisé en ce que le montage (11) de vidange du produit comprend un socle (31) associé à un vérin (32) apte à maintenir le récipient (1) sur ce socle et à des moyens de rotation (33) axe horizontal pour faire pivoter le récipient autour de cet axe, de manière qu'il puisse être ramené vers le montage (9) de manipulation du couvercle (2) pour que celui-ci referme le récipient (1), ce vérin (32) et ces moyens de rotation (33) étant commandés par les moyens de synchronisation (12).

8. Dispositif selon la revendication 7, caractérisé en ce que les moyens (3) pour amener le récipient sur une aire de manipulation (4) comprennent un chariot mobile (3) sur lequel est placé le récipient (1), ce chariot se déplaçant vers les moyens (7) qui permettent de saisir le récipient pour l'amener sur l'appareil de pesée (8).

9. Dispositif selon la revendication 8, caractérisé en ce que les moyens de synchronisation (12) comprennent des relais associés à chaque vérin, et aux moyens de rotation (33), du montage de vidange (11), ces relais étant commandés par des circuits temporisateurs réglés pour permettre la synchronisation des différents déplacements du récipient (1).

## Patentansprüche

1. Automatische Vorrichtung zum Wiegen und Entleeren eines in einem mit einem Deckel (2) ausgerüsteten Behälter (1) enthaltenen Produktes, mit Mitteln (3), um den Behälter auf eine Manipulationsfläche zu bringen, mit Mitteln (7), um den Behälter (1) zu ergreifen, ihn auf eine Wiegevorrichtung (8) zu bringen und ihn zu einer Manipulationseinrichtung (9) für den Deckel (2) ausgerichtet anzuordnen, wobei diese Mittel durch lineare Antriebe steuerbar sind, und mit Mitteln (10), um den Behälter (1) in die Manipulationseinrichtung (9) für den Deckel (2) zu stellen und mit einer Einrichtung (11) zum Entleeren des Produktes in Eingriff zu bringen, wobei diese Mittel (10) durch lineare Antriebe steuerbar sind, dadurch gekennzeichnet, daß das Entleeren des Produktes durch Umkehren des Behälters erfolgt und daß die Vorrichtung ferner elektrische Synchronisationseinrichtungen (12) umfasst, durch die die vorhergehenden Mittel und Einrichtungen in einem ersten Sinn gesteuert werden können, daß der Behälter (2) auf die Manipulationsfläche (4) gebracht, zum Überführen auf die Wiegefläche (8) ergriffen, in der Manipulationseinrichtung (9) zum Entfernen des Deckels (2) angeordnet und mit der Einrichtung (11) zum Entleeren des Producktes in Eingriff gebracht wird, und daß daraufhin die Mittel und Einrichtungen in einem zweiten zu dem ersten Sinn umgekehrten Sinn derart gesteuert werden, daß der Behälter (2) von der Einrichtung (11) zum Entleeren freigegeben und in der Manipulationseinrichtung (9) zum Wiederaufbringen des Deckels (2) auf den Behälter (1) angeordnet wird, damit der Behälter ergriffen und auf die Wiegevorrichtung (8) zurückgebracht und anschließend zu der Manipulationsfläche (4) zurückgebracht wird.

2. Vorrichtung nach Anspruch 1, dadurch gekennzeichnet, daß die Mittel (7), die das Ergreifen des Behälters (1) ermöglichen, um ihn auf die Wiegevorrichtung (8) zu bringen und um ihn ausgerichtet zu der Manipulationseinrichtung (9) für den Deckel (2) anzuordnen, einen Greif-Linearantrieb (13) aufweist, der mit einer Greifeinrichtung (14) ausgerüstet und durch die Synchronisationseinrichtungen (12) derart steuerbar ist, daß der Behälter (1) auf der Manipulationsfläche (4) ergriffen, auf die Wiegefläche (8) vor dem Entfernen des Deckels (2) zum Wiegen des Producktes gebracht, daraufhin von der Wiegefläche (8) auf die Manipulationsfläche (4) nach der Entleerung des Producktes und dem Schließen des Behälters (1) durch den Deckel (2) zurückgebracht wird.

3. Vorrichtung nach Anspruch 2, dadurch gekennzeichnet, daß der Greif-Linearantrieb (13) an einem Tragteil (16) befestigt ist, dem ein Senkrecht-Linearantrieb (17) zugeordnet ist, der ermöglicht, daß das Tragteil (16) vor dem Wiegen des vollen Behälters angehoben wird, daß das Tragteil (16) zum Absetzen des Behälters auf der Wiegevorrichtung abgesenkt wird, daß das Tragteil (16) nach dem Wiegen angehoben wird, daß das Tragteil (16) vor dem Anorden in der Manipulationseinrichtung (9) abgesenkt wird, um den Deckel (2) zu entfernen und vor der Anordnung in der Einrichtung (11) zum Entleeren, daß das Tragteil (16) erneut nach dem Entleeren und Schließen des Behälters (1) mit dem Deckel (2) angehoben wird, daß das Tragteil (16) abgesenkt wird, wenn der Behälter zu der Wiegevorrichtung (8) ausgerichtet ist, daß das Tragteil (16) nach dem Wiegen des leeren Behälters angehoben und daß das Tragteil abgesenkt wird, wenn der Behälter auf die Manipulationsfläche (4) zurückgeführt ist, wobei der Greif-Linearantrieb (13) durch die Synchronisationseinrichtung (12) gesteuert wird.

4. Vorrichtung nach Anspruch 3, dadurch gekennzeichnet, daß die Mittel (10), um den Behälter in der Manipulationseinrichtung (9) für den Deckel (2) anzuordnen und um ihn mit der Einrichtung (11) zum Entleeren des Producktes in Eingriff zu bringen, einen Eingriff-Linearantrieb (23) umfassen, der mit Greifmitteln (24) ausgerüstet ist, die ermöglichen, den Behälter (1) nach dem Wiegen zu ergreifen, ihn in die Manipulationseinrichtung (9) für den Deckel (2) zu dessen Entfernen zu bringen, den Behälter anschließend in die Einrichtung (11) zum Entleeren des Produktes zu bringen, und den Behälter (1) daraufhin zu der Manipulationseinrichtung (9) zum erneuten Schließen des Behälters mit dem Deckel (2) nach dem Entleeren zurückzuführen, wobei der Eingriff-Linearantrieb durch die Synchronisationseinrichtung (12) steuerbar ist.

5. Vorrichtung nach Anspruch 4, dadurch gekennzeichnet, daß das Tragteil (16) einem Horizontal-Linearantrieb (18) zum Verschwenken um eine senkrechte Achse (19) zugeordnet ist, um den Behälter (1) aus einer zu der Wiegeeinrichtung (8) gegenüberliegend ausgerichteten Lage in eine zu der Manipulationseinrichtung (9) für den Deckel ausgerichteten Lage zu bringen, wobei der Linearantrieb durch die Synchronisationseinrichtung (12) steuerbar ist.

6. Vorrichtung nach Anspruch 5, dadurch gekennzeichnet, daß die Manipulationseinrichtung (9) für den Deckel (2) einen einem ersten Linearantrieb (26) zugeordneten Sockel (25), der zum Halten des Behälters (1) auf dem Sockel geeignet ist, und einen zweiten Linearantrieb (28) aufweist, der mit einer Greifeinrichtung (29) ausgerüstet ist, durch die der Deckel (2) entfernbar oder zurückbringbar ist, wobei diese zwei Linearantriebe durch die Synchronisationseinrichtungen (12) steuerbar sind.

7. Vorrichtung nach Anspruch 5, dadurch gekennzeichnet, daß die Einrichtung (11) zum Entleeren des Produktes einen Sockel (31) aufweist, dem ein zum Halten des Behälters (1) auf diesem Sockel geigneter Linearantrieb (32) und eine Einrichtung zum Drehen (32) um eine horizontale Achse zugeordnet sind, um den Behälter um diese Achse derart zu drehen, daß er nach unten entleert wird, und diesen Behälter dann derart umzudrehen, daß er zu der Manipulationseinrichtung (9) für den Deckel (2) gebracht werden kann, damit diese den Behälter (1) schließt, wobei der Linearantrieb (32) und die Rotationseinrichtung (33) durch die Synchronisationseinrichtung (12) steuerbar sind.

8. Vorrichtung nach Anspruch 7, dadurch gekennzeichnet, daß die Mittel (3) um den Behälter auf die Manipulationsfläche (4) zu führen, einen bewegbaren Wagen (3) umfassen, auf dem der Behälter (1) angeordnet ist, wobei sich der Wagen zu den Mitteln (7) bewegt, die das Ergreifen des Behälters ermöglichen, um diesen auf die Wiegevorrichtung (8) zu bringen.

9. Vorrichtung nach Anspruch 8, dadurch gekennzeichnet, daß die Synchronisationseinrichtungen (12) Relais aufweisen, die jedem Linearantrieb und der Rotationseinrichtung (33) für die Einrichtung (11) zum Entleeren zugeordnet sind, wobei diese Relais durch gesteuerte Verzögerungskriese steuerbar sind, um die zeitliche Abstimmung der verschiedenen Bewegungen des Behälters (1) zu ermöglichen.

**Claims**

1. Automatic apparatus for weighing and emptying a product contained in a container (1), provided with a cover (2) comprising means (3) for bringing the container into a manipulating area, means (7) for grasping the container (1), bringing it onto a weighing means (8) and for positioning it in front of a device (9) for manipulating the cover (2), said means (7) being controlled by jacks, as well as means (10) for placing the container in the manipulating device (9) for cover (2) and engaging it in a product emptying device (11), said means (10) being controlled by jacks, characterized in that the emptying of the products takes place by turning over the container and in that the apparatus also comprises electrical synchronizing means (12) able to control the aforementioned means and devices in a first direction in such a way that the container (2) is brought into a manipulating area (5), grasped and brought onto a weighing means (8) placed in the manipulating device (9) in such a way that the cover (2) is removed, engaged in the product emptying device (11) and then in such a way that the means and devices are controlled in a second direction opposite to the first direction in such a way that the container (2) is disengaged from the emptying device (11), placed in the manipulating device (9) in such a way that the cover (2) is placed back on container (1) and so that the container is grasped and brought onto the weighing means (8) and then moved to the manipulating area (4).

2. Apparatus according to claim 1, characterized in that the means (7) making it possible to grasp the container (1) and bring it onto the weighing means (8), whilst positioning it in front of the manipulating device (9) of the cover (2) comprise a grasping jack (13) provided with gripping means (14) and controlled by synchronizing means (12) in such a way that the container (1) is grasped in the manipulating area (4), brought to the weighing area (8) before removing the cover (2) for emptying the product, after which it is moved from the weighing area (8) to the manipulating area (4) after emptying the product and sealing container (1) by cover (2).

3. Apparatus according to claim 2, characterized in that the grasping jack (13) is mounted on a frame (16) associated with a vertical jack (17) able to raise frame (16) before weighing the full container, lower the frame (16) for placing the container on the weighing means, raising the frame (16) after weighing, lowering the frame (16) after positioning in the manipulating device (9) in such a way that the cover (2) is extracted and before positioning in the emptying device (11), then raising the frame (16) again after emptying and sealing the container (1) by cover (2), followed by the lowering of frame (16) when container (1) faces the weighing means (8), raising the frame (16) after weighing the empty container and lowering the frame when the container is brought into the manipulating area (4), said grasping jack (13) being controlled by the synchronizing means (12).

4. Apparatus according to claim 3, characterized in that the means (10) for placing the container in the manipulating device (9) of cover (2) and for engaging it in the product emptying device (11) comprise an engagement jack (23) equipped with gripping means (24) able to grasp container (1) after weighing, bring it into the manipulating device (9) of cover (2), so that the latter is removed, then bring the container into the product emptying device (11) and then move the container (1) to the manipulating device (9) in such a way that the container is sealed by cover (2) following emptying, said engagement jack being controlled by the synchronizing means (12).

5. Apparatus according to claim 4, characterized in that the frame (16) is associated with a horizontal jack (16) able to pivot about a vertical shaft (19) in order to move container (1) from a position facing the weighing means (8) into a position facing the cover manipulating device (9), said jack being controlled by the synchronizing means (12).

6. Apparatus according to claim 5, characterized in that the cover manipulating device (9) comprises a base (25) associated with a first jack (26) able to maintain container (1) on the base and a second jack (28) provided with gripping means (29) able to remove or refit the cover (2), said two jacks being controlled by the synchronizing means (12).

7. Apparatus according to claim 5, characterized in that the product emptying device (11) comprises a base (31) associated with a jack (32) able to maintain the container (1) on said base and with horizontally axed rotation means (33) for pivoting the container about said axis so as to empty it downwards, followed by the turning over of the container so that it can be brought to the cover manipulating device (9) in such a way that the cover (2) re-seals container (1), said jack (32) and said rotation means (33) being controlled by the synchronizing means (12).

8. Apparatus according to claim 7, characterized in that the means (3) for bringing the container into the manipulating area (4) comprise a trolley (3) on which is placed container (1), said trolley moving towards the means (7) which make it possible to grasp the container to bring it onto the weighing means (8).

9. Apparatus according to claim 8, characterized in that the synchronizing means (12) comprise relays associated with each jack and means (33) for rotating the emptying device (11), said relays being controlled by time lag circuits regulated so as to permit the synchronization of the different displacements of container (1).

# FIG.2

FIG.3